# FASCICULE DE BREVET EUROPEEN

(11) **EP 1 420 935 B1**
(45) Date de publication et mention de la délivrance du brevet: **11.11.2009**
(21) Numéro de dépôt: 02764958.1
(22) Date de dépôt: 09.07.2002
(51) Int. Cl.: B29C 51/08, B29C 51/30

(54) **PROCEDE ET INSTALLATION POUR THERMOFORMER DES RECIPIENTS**
VERFAHREN UND VORRICHTUNG ZUM THERMOFORMEN VON BEHÄLTERN
METHOD AND DEVICE FOR THERMOFORMING OF CONTAINERS

(30) Priorité: 23.08.2001 FR 0111031
(43) Date de publication de la demande: 26.05.2004
(73) Titulaire: ERCA FORMSEAL, 91940 Les Ulis (FR)
(72) Inventeur: MICHELON, Bernard, F-78150 LE CHESNAY (FR); SCHWAB, Dominique, F-78000 VERSAILLES (FR)
(74) Mandataire: Intes, Didier Gérard André
(86) Numéro de dépôt international: PCT/FR2002/002405
(87) Numéro de publication internationale: WO 2003/018294

(56) Documents cités:
- EP-A- 0 087 527
- EP-A- 0 894 610
- DE-B- 1 167 512
- FR-A- 1 307 368
- GB-A- 1 042 775
- US-A- 3 011 212
- US-A- 3 235 639
- US-A- 3 260 781
- US-A- 3 470 281
- US-A- 3 499 188
- US-A- 3 912 438
- US-A- 4 228 121
- US-A- 4 404 162

## Description

La présente invention concerne un procédé de fabrication d'objets tels que des récipients par thermoformage à partir de plaquettes de matériau thermoplastique, dans lequel on chauffe les plaquettes et on réalise une étape de thermoformage dans laquelle on déforme plastiquement les plaquettes chauffées par étirement.

On connaît déjà un procédé de ce type par le brevet français n° 2 766 123. Ce procédé donne toute satisfaction et ce brevet français en expose les avantages qui résident en particulier dans le fait que, selon que l'on thermoforme un ou plusieurs objets dans chaque plaquette, l'utilisation de ces plaquettes permet d'éviter ou de limiter considérablement les déchets qui existent lorsqu'on utilise une bande continue de matériau thermoplastique.

Généralement, pour thermoformer un objet tel qu'un récipient à partir d'une plaquette, on maintient la plaquette dans une station de thermoformage par son rebord qui n'est pas déformé, et l'on réalise une étape de thermoformage en étirant la région centrale de la plaquette pour former le corps d'un récipient. Ainsi, le rebord de l'objet, par exemple un récipient, est constitué par une zone de la plaquette non déformée. En général, cette zone est plane comme l'était initialement la plaquette et elle présente une épaisseur égale à l'épaisseur initiale de la plaquette, tandis que la paroi du corps du récipient formé dans cette plaquette présente une épaisseur très inférieure, qui est fonction de l'amplitude de l'étirement réalisée lors du thermoformage. Ainsi, le procédé connu de thermoformage à partir de plaquettes conduit à limiter quelque peu la géométrie des rebords des objets réalisés par thermoformage.

De plus, selon le type d'objet que l'on souhaite thermoformer, on détermine l'épaisseur initiale de la plaquette pour que, après l'étirement souhaité, le corps de l'objet réalisé par étirement présente une épaisseur donnée. Par exemple, l'épaisseur de la paroi du corps peut être de 10 à 20 fois plus petite que l'épaisseur initiale de la plaquette. Toutefois, avec le procédé existant, l'épaisseur de la plaquette reste inchangée dans la région du rebord de l'objet. Il en résulte que, dans ce rebord, se trouve une quantité de matière inutilisée alors qu'il est rarement, voire jamais nécessaire que le rebord des objets présente une épaisseur aussi importante que l'épaisseur initiale de la plaquette.

EP 0 087 527 divulgue un procédé selon le préambule de la revendication 1.

La présente invention vise à améliorer encore cet état de la technique pour surmonter les inconvénients précités, faciliter la mise en place correcte de la plaquette pour le matriçage et corriger ses éventuelles déformations.

Ce but est atteint grâce au fait que, avant de réaliser le matriçage d'une plaquette, on met cette plaquette en place sur un bord de matriçage entre les deux bras ouverts d'une pince de calage et on referme ces bras pour conformer le contour de la plaquette.

L'étape de matriçage permet de donner la géométrie souhaitée au rebord de l'objet dont le corps est réalisé par thermoformage. En particulier, cette étape permet de donner à ce rebord une forme non plane, par exemple une forme telle que le rebord présente une face supérieure convexe. Lorsque l'objet réalisé par thermoformage est un récipient contenant un produit à boire, un tel rebord convexe facilite grandement le confort de l'utilisateur quand il absorbe ce produit en le buvant directement au récipient. De manière générale, le matriçage permet de donner une grande liberté quant à l'aspect final du rebord de l'objet réalisé par thermoformage.

De plus, le matriçage permet de réduire l'épaisseur du rebord par rapport à l'épaisseur initiale de la plaquette. Ce faisant, le matériau initialement présent dans la zone du rebord vient remplir la cavité formée entre les outils de matriçage entre lesquels est emprisonnée la plaquette et le surplus de matière est naturellement refoulé vers la région centrale de la plaquette et peut ainsi être utilisé lors du thermoformage. Ainsi, le matriçage permet d'optimiser le choix des paramètres que constituent l'épaisseur initiale de la plaquette, l'épaisseur finale du rebord, le niveau d'étirement, et l'épaisseur finale du corps de l'objet.

La matière des plaquettes étant emprisonnée lors du matriçage du côté extérieur (c'est-à-dire du côté qui, après le thermoformage, sera sur l'extérieur de l'objet thermoformé), la forme du rebord de cet objet est entièrement déterminée par le matriçage sans qu'il soit nécessaire de découper ce rebord après le thermoformage. On évite ainsi la génération de déchets en donnant d'emblée au rebord sa forme définitive.

Avantageusement, avant l'étape de matriçage, on chauffe au moins les régions périphériques des plaquettes.

Ce chauffage permet de profiter du comportement thermoplastique du matériau qui constitue la plaquette pour faciliter l'étape de matriçage. Ceci facilite en particulier le fluage du matériau vers la région centrale de la plaquette comme indiqué ci-dessus.

Les plaquettes, qui sont initialement rigides, mais qui peuvent être ramollies par chauffage, se prêtent très bien à l'opération de matriçage.

Avantageusement, lors de l'étape de matriçage, on utilise pour chaque plaquette une matrice qui supporte la région périphérique de la plaquette, et la plaquette continue d'être supportée par cette matrice au moins pendant l'étape de thermoformage.

La plaquette venant de subir le matriçage est parfaitement supportée par la matrice, même lors de l'étape de thermoformage.

Ainsi, avantageusement, on réalise le matriçage de chaque plaquette entre la matrice et un poinçon et, lors de l'étape de thermoformage, on maintient la plaquette entre ledit poinçon et ladite matrice.

La matrice et le poinçon constituent des moyens de maintien particulièrement efficaces pour maintenir la plaquette pendant l'étape de thermoformage. De plus, le fait de continuer à maintenir le rebord matricé entre la matrice et le poinçon pendant quelques instants après l'opération de matriçage proprement dite permet de stabiliser la forme du rebord matricé. En particulier, si la plaquette a été préalablement chauffée, on peut ainsi maintenir le rebord matricé jusqu'à ce qu'il refroidisse quelque peu, sans que ceci retarde l'étape de thermoformage qui intervient après le matriçage.

Avantageusement, pour chaque plaquette, on réalise l'étape de matriçage puis, sans déplacer la plaquette, on réalise l'étape de thermoformage.

On réalise alors le thermoformage pratiquement en continu avec le matriçage, et donc très rapidement, ce qui permet des cadences de production élevées.

L'invention concerne également une installation pour fabriquer des objets tels que des récipients par thermoformage à partir de plaquettes de matériau thermoplastique, comprenant des moyens de chauffage desdites plaquettes et des moyens de thermoformage aptes à déformer plastiquement les plaquettes chauffées par étirement.

On connaît une installation de ce type par le brevet français n° 2 766 123. Cette installation donne toute satisfaction, mais, comme indiqué plus haut en relation avec le procédé, elle ne permet pas de choisir la géométrie des rebords des objets réalisés par thermoformage, ni d'optimiser l'utilisation de la quantité de la matière qui constitue la plaquette, puisque la matière constituant le rebord reste non utilisée et d'une épaisseur égale ou sensiblement égale à l'épaisseur initiale de la plaquette.

EP 0 087 527 divulgue une installation selon le préambule de la revendication 8.

L'invention vise à proposer une installation surmontant les inconvénients précités de l'état de la technique, faciliter la mise en place correcte de la plaquette pour le matriçage et corriger ses éventuelles déformations.

Ce but est atteint grâce au fait que l'installation de l'invention comprend une pièce de calage formée par une pince dont les deux bras peuvent être ouverts lors de la mise en place d'une plaquette sur un bord de matriçage de l'outil de matriçage et refermés avant le matriçage pour délimiter entre eux une ouverture, dans laquelle la plaquette est calée et qui est apte à conformer le contour de la plaquette avant le matriçage.

Cet outil de matriçage peut être réalisé de manière très simple et peu coûteuse. Il est disposé, sur le trajet des plaquettes dans l'installation, tout au plus au niveau de la station de thermoformage. Un tel outil, associé aux moyens pour emprisonner la plaquette lors du matriçage permet, pratiquement sans perte de temps et sans coût d'outillage excessif, d'optimiser l'utilisation du matériau constituant la plaquette et de donner sa forme définitive au rebord de l'objet thermoformé, comme indiqué précédemment en relation avec le procédé.

Avantageusement, l'outil de matriçage comporte une matrice comprenant un bord de matriçage apte à supporter la région périphérique d'une plaquette en ménageant un espace libre au droit de la région centrale de la plaquette et cette matrice constitue un support pour la plaquette dans la station de thermoformage.

Cette matrice est un support efficace pour la plaquette dans la station de thermoformage dont elle ne gêne pas le fonctionnement puisqu'elle ménage un espace libre au droit de la région centrale de la plaquette qui est déformée par un piston lors du thermoformage.

Ainsi, avantageusement, l'outil de matriçage comporte un poinçon de matriçage qui est susceptible d'être déplacé entre une position active dans laquelle il est rapproché de la matrice pour réaliser le matriçage d'une plaquette en coopérant avec une région périphérique de cette plaquette portée par la matrice et une position inactive, dans laquelle il est écarté de la matrice, la matrice et le poinçon de matriçage étant disposés dans la station de thermoformage et formant des moyens de maintien de la plaquette dans ladite station.

Le fait de disposer la matrice et le poinçon de la matriçage dans la station de thermoformage permet d'éviter que la présence des moyens de matriçage ne modifie l'encombrement général de l'installation. Eventuellement, la matrice et le poinçon de matriçage peuvent être mis en place dans une installation existante, du type décrit dans le brevet français n° 2 766 123, pratiquement sans modifier d'autres outils de cette installation que la station de thermoformage.

Avantageusement, l'installation comprend une pièce de calage délimitant une ouverture dans laquelle une plaquette peut être calée en étant placée sur le bord de matriçage.

Cette pièce est avantageusement portée élastiquement par le corps de la matrice et peut être repoussée dans un renfoncement par le poinçon.

Avantageusement, la station de thermoformage comprend un piston de thermoformage et une chambre de thermoformage situés en regard l'un de l'autre, le piston étant susceptible d'être déplacé entre une position de thermoformage dans laquelle il pénètre dans la chambre et une position d'effacement dans laquelle il est écarté de cette chambre et l'installation comprend des moyens pour commander successivement le déplacement du poinçon de matriçage de sa position inactive à sa position active, le déplacement du piston de thermoformage de sa position d'effacement à sa position de thermoformage puis de nouveau à sa position d'effacement et le déplacement du poinçon de matriçage de sa position active à sa position inactive.

Pour réaliser le thermoformage, il est nécessaire de maintenir la plaquette de manière ferme, afin d'éviter que celle-ci ne soit déplacée lors de l'opération d'étirement qui est réalisée par le thermoformage. En général, la plaquette est alors pincée entre le bord de la chambre de thermoformage et le bord d'un cylindre dans lequel se déplace le piston de thermoformage lorsqu'il est hors de cette chambre. Dans les installations connues, ces bords sont plats et pincent le rebord de la plaquette sans le déformer. Avec l'invention, le poinçon de matriçage est utilisé, avec la matrice, non seulement comme outil de matriçage, mais aussi comme moyen de pincement pour maintenir la plaquette lors du thermoformage. Le poinçon et la matrice sont déplacés l'un par rapport à l'autre de manière analogue à la façon dont, dans les installations classiques, sont déplacés la chambre de thermoformage et le cylindre dans lequel se déplace le piston de thermoformage à l'extérieur de cette chambre. De cette manière, le matriçage se fait sans perte de temps par rapport aux installations classiques.

Selon une première variante avantageuse, la chambre de thermoformage est disposée au-dessus du piston de thermoformage et la matrice est formée dans la paroi d'un cylindre dans lequel le piston est ramené dans sa position d'effacement, tandis que le poinçon de matriçage coopère avec une partie de bord de la chambre de thermoformage, c'est-à-dire qu'il peut être porté ou supporté par une telle partie de bord, en étant mobile par rapport à elle ou qu'il peut lui être fixé, voire même former une seule pièce avec elle.

Dans ce cas, les objets tels que les récipients sont thermoformés avec leurs corps disposé vers le haut par rapport à leurs rebords. Comme indiqué dans le brevet français n° 2 766 123, cette disposition est particulièrement intéressante lorsque les objets thermoformés sont des récipients dont la fabrication doit respecter des règles d'hygiène très poussées. En effet, dans ce cas, la poussière ne risque pas de se déposer sur le bord de l'ouverture ni à l'intérieur du récipient. Lorsque l'installation comprend une station de remplissage des récipients, les récipients sont saisis par des moyens de préhension et retournés pour être convenablement disposés sur un convoyeur, avec leur ouverture dirigée vers le haut, avant de passer dans la station de remplissage. En d'autres termes, les ouvertures des récipients restent dirigées vers le bas jusqu'à ce qu'il devienne nécessaire de les retourner pour les remplir.

Selon une autre variante avantageuse, le piston de thermoformage est disposé au-dessus de la chambre de thermoformage et la matrice est formée par une partie de bord de la chambre de thermoformage, tandis que le poinçon de matriçage coopère avec une partie de bord du cylindre dans lequel le piston est ramené dans sa position d'effacement.

Dans ce cas, de manière plus classique, les récipients sont thermoformés avec leurs corps dirigé vers le bas par rapport à leurs rebords.

Les deux sens de thermoformage précités sont parfaitement compatibles avec la présence des outils de matriçage.

L'invention concerne encore un objet tel qu'un récipient présentant un corps réalisé par thermoformage dans un matériau thermoplastique. Cet objet, obtenu en mettant en oeuvre le procédé de l'invention et/ou en utilisant l'installation de l'invention, a la particularité de présenter, en outre, un rebord matricé.

Les objets tels que les récipients qui sont réalisés par thermoformage peuvent l'être à partir d'une bande thermoplastique ou de plaquettes. Dans les deux cas, avec les systèmes connus, ces objets présentent des rebords plans, correspondant au plan de la bande thermoplastique, ou à celui d'une zone marginale de la plaquette. Dans les deux cas, le rebord de chaque récipient présente une épaisseur sensiblement égale à l'épaisseur de la bande thermoplastique ou de la plaquette avant le thermoformage. Comme indiqué précédemment, ce rebord présente une épaisseur qui peut être de 10 à 20 fois supérieure à l'épaisseur du corps des objets, en fonction du niveau d'étirement par thermoformage. Ce rebord est donc relativement épais et correspond à une quantité de matériau non utilisée.

Un objet tel qu'un récipient réalisé par thermoformage avec un rebord matricé est exempt de ces inconvénients, puisque d'une part le rebord peut présenter une forme non plane du fait du matriçage et que, d'autre part, ce matriçage permet d'en limiter l'épaisseur par rapport à l'épaisseur initiale de la plaquette dans laquelle il est thermoformé.

Avantageusement, le rebord matricé présente une face supérieure convexe.

Lorsque l'objet thermoformé est un récipient contenant un produit buvable, un tel rebord ayant une face supérieure convexe améliore les possibilités de verser le produit contenu dans ce récipient, et améliore également le confort de l'utilisateur buvant le produit directement au récipient.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1 est une vue générale d'une installation conforme à l'invention, permettant de mettre en oeuvre le procédé de l'invention ;
- les figures 2 à 4 montrent différentes phases de l'étape de matriçage ;
- la figure 5 montre le début de l'étape de thermoformage selon deux variantes ;
- les figures 6 et 7 montrent la situation avant le matriçage et au début du thermoformage selon une variante ;
- la figure 8 est une vue en perspective montrant la matrice de thermoformage ;
- la figure 9 montre la matrice de la figure 8 et son poinçon en cours de rapprochement de cette matrice ; et
- la figure 10 montre un exemple de récipient conforme à l'invention.

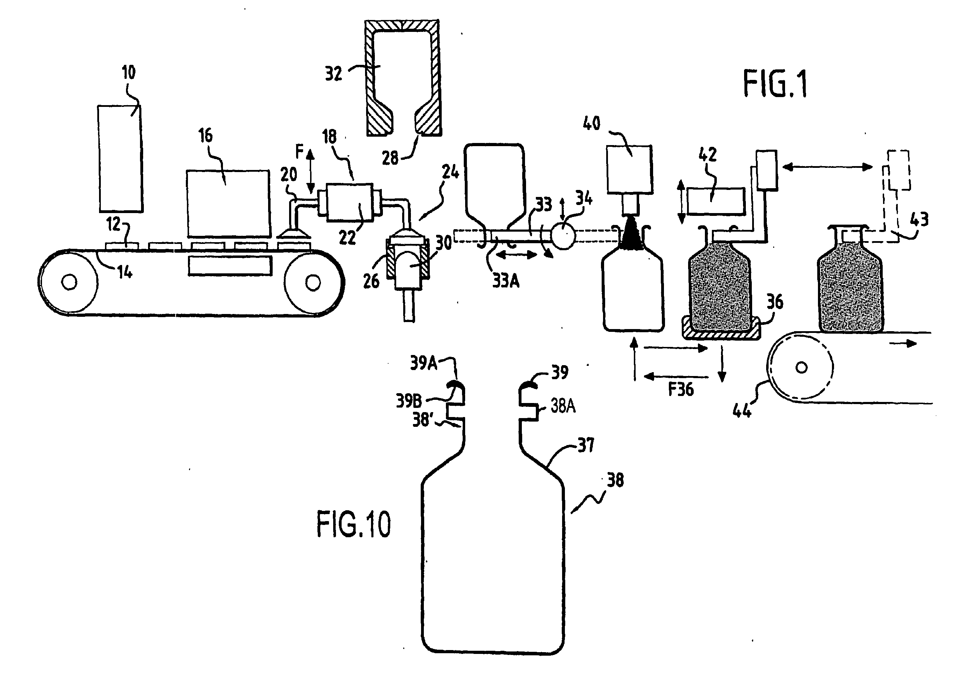

L'installation représentée sur la figure 1 comporte une station d'alimentation 10 qui permet de disposer des plaquettes 12 en matériau thermoplastique sur un convoyeur 14 qui entraîne ces plaquettes dans des moyens de chauffage 16 permettant de porter les plaquettes à leur température de déformation thermoplastique. En sortie de ces moyens de chauffage, les plaquettes chaudes sont saisies par des moyens de préhension d'un poste de transfert 18. Par exemple, ce poste comprend des bras à ventouses 20 portant, par exemple, des disques en Téflon aptes à saisir les plaquettes par aspiration, sans pratiquement les refroidir.

Comme indiqué par la double flèche F, les bras sont déplaçables verticalement pour saisir les plaquettes et les lever. Ils sont par exemple solidaires d'un tourniquet 22 qui les entraîne de manière à les placer dans une station de matriçage 24. Dans cette situation, les bras peuvent être abaissés et l'aspiration peut cesser de manière à poser les plaquettes sur une matrice 26, au-dessus de laquelle se trouve un poinçon de matriçage 28 apte à être déplacé vers le haut pour permettre le positionnement du bras 20 dans la station de matriçage et la mise en place de la plaquette dans cette station, et à être déplacé vers le bas pour, en coopérant avec la matrice 28, réaliser un matriçage du bord de la plaquette.

Dans l'exemple représenté, la station de matriçage sert également au thermoformage et le thermoformage est réalisé vers le haut à l'aide d'un piston de thermoformage 30, mobile dans un cylindre dont le bord forme ou porte la matrice 26, tandis que la chambre de thermoformage 32 est disposée au-dessus du piston, et que son bord inférieur porte ou forme le poinçon de matriçage 28.

Après le thermoformage, la chambre de thermoformage étant écartée des récipients thermoformés, ces derniers sont transférés dans la partie aval de l'installation.

Par exemple, le récipient 38 qui vient d'être thermoformé est saisi à l'aide de pinces 33A équipant l'extrémité libre d'un bras rétractable 33. Le bras est allongé pour saisir le récipient dans la station de thermoformage, puis rétracté pour l'en écarter.

Dans l'exemple représenté, les récipients sont thermoformés avec leurs corps vers le haut et ils doivent être retournés afin d'être remplis puis fermés. Pour cela, le bras 33 est monté sur un support pivotant 34 qui, une fois le récipient écarté de la station de thermoformage, fait décrire un demi-tour au bras dans un plan vertical pour retourner le récipient. Le support 34 peut être mobile en va-et-vient vertical pour permettre au bras 33, une fois qu'il a saisi le récipient dans la station de thermoformage, de l'écarter de l'outil inférieur de cette station.

Le récipient retourné, toujours porté par le bras 33, est disposé dans la station de remplissage 40. Il peut être pris en charge par un support inférieur 36 qui est déplacé selon les côtes d'un rectangle comme l'indiquent les flèches F36 pour se placer sous le récipient rempli, supporter ce dernier et l'amener par un déplacement horizontal dans une station 42 de pose et de scellage de couvercles ou de bouchonnage. Au sortir de cette station, le récipient est pris en charge par un nouveau bras 43 à pinces, qui le place sur un convoyeur final 44 permettant son évacuation de l'installation et son conditionnement.

Dans l'exemple représenté, les plaquettes 12 sont entièrement chauffées dans les moyens de chauffage 16, avant d'être disposées dans la station de matriçage qui réalise également le thermoformage.

De manière alternative, on pourrait prévoir que les plaquettes soient seulement chauffées sur leur pourtour ou soient seulement portées à une température inférieure à celle qui est nécessaire pour réaliser le thermoformage par étirement selon l'amplitude souhaitée pour former les objets, avant d'être disposées dans les moyens de matriçage et que, en sortie de ces moyens, et après réalisation du matriçage, la région centrale des plaquettes soit portée à la température de thermoformage, avant que les plaquettes ne soient soumises à l'opération de thermoformage.

Toutefois, l'exemple représenté sur la figure 1 est avantageux car il permet de simplifier l'outillage nécessaire, et autorise des cadences de production élevées.

On pourrait également réaliser l'étape de matriçage par matriçage à chaud, en utilisant un outil de matriçage qui comporte au moins une partie chauffée. Par exemple, la matrice et/ou le poinçon de matriçage peuvent être chauffés. Toutefois, l'utilisation d'un outil de matriçage froid permet de faire en sorte que la stabilisation de la déformation réalisée par matriçage soient plus rapides.

Les plaquettes 12 pouvant avoir été légèrement refroidies lors de leur transfert entre le convoyeur 14 et la station de thermoformage 24, il est avantageux que le piston d'étirement 30 soit un piston chauffant.

Dans l'exemple de la figure 1, les moyens d'entraînement des plaquettes puis des récipients comprennent le convoyeur à bande 14 et des moyens de transfert à bras pivotants et/ou coulissants.

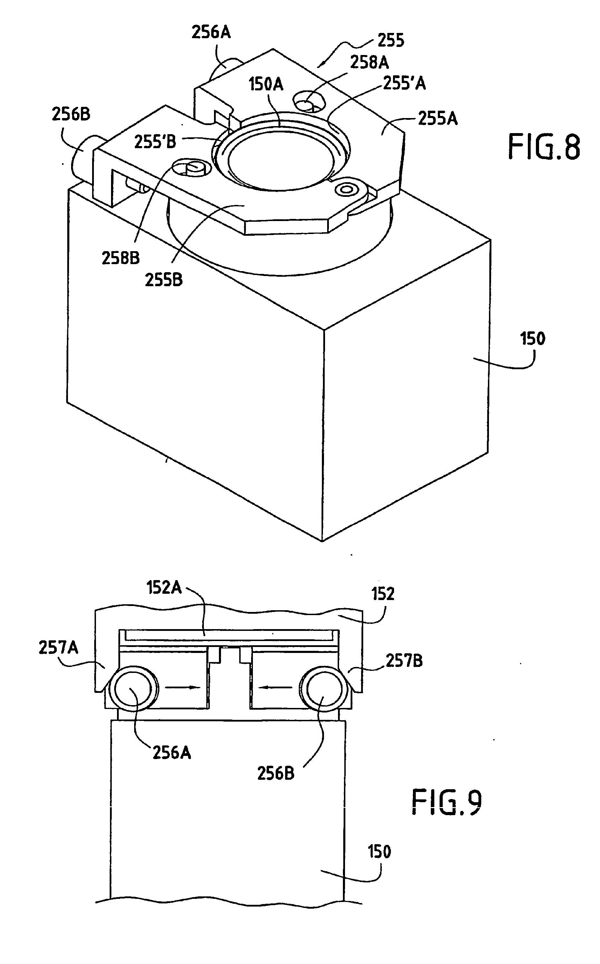

L'invention s'applique également à une installation comprenant d'autres moyens d'entraînement des plaquettes, par exemple une installation en carrousel du type représenté sur la figure 9 du brevet français n° 2 766 123.

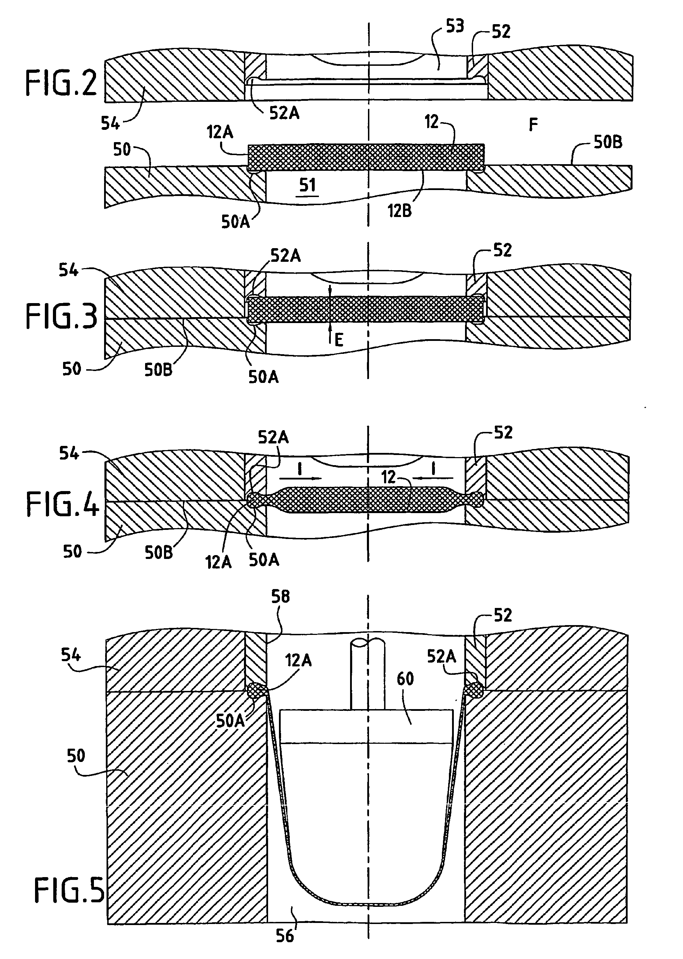

En référence aux figures 2 à 4, on décrit maintenant plus en détail l'étape de matriçage. La plaquette 12, présentant initialement une épaisseur sensiblement constante, est disposée sur une matrice 50 qui présente un bord de matriçage 50A sur lequel repose la région périphérique 12A de la plaquette 12. La matrice est réalisée de telle sorte qu'une zone cylindrique vide 51 soit préservée sous la région centrale 12B de la plaquette, le bord de matriçage ayant une forme annulaire.

Le poinçon de thermoformage 52 est mobile verticalement par rapport à la matrice 50. Ce poinçon comporte un bord actif 52A situé verticalement en alignement avec le bord de matriçage 50A, et le poinçon comporte une zone intérieure vide 53, située en correspondance avec l'espace 51. Le poinçon 52 coopère avec un corps 54 en étant fixé dans un évidement central de ce corps 54 tout en pouvant être déplacé verticalement par rapport à lui. Le corps 54 est déplaçable verticalement pour venir reposer contre la face supérieure 50B de la matrice 50 formée dans une région de la matrice excluant le bord de matriçage 50A. La figure 2 montre le corps 54 et le poinçon 52 en position inactive, dans laquelle le poinçon est écarté de la matrice. C'est dans cette position que la plaquette 12 peut être mise en place sur la matrice.

La figure 3 montre la phase dans laquelle le corps 54 a été descendu, de manière à reposer sur la face supérieure 50B de la matrice pour former un plan de joint. Toutefois, dans cette situation, le poinçon de matriçage 52 est toujours sensiblement dans sa position inactive, car la distance minimale entre le bord actif 52A de ce poinçon et le bord de matriçage 50A reste sensiblement égale à l'épaisseur courante E de la plaquette 12.

Ainsi, dans la situation de la figure 3, la plaquette 12 est emprisonnée entre la matrice 50, le corps 54 et le poinçon 52. La figure 4 montre la fin du matriçage, le poinçon 52 occupant sa position active. On voit que, dans cette situation, la région périphérique 12A de la plaquette 12 a été déformée par matriçage. Par exemple, les formes du bord de matriçage 50A et du bord actif 52A du poinçon de matriçage sont telles que le matriçage donne à la région périphérique 12A de la plaquette 12 la forme d'un bourrelet annulaire. Lors de cette opération, la matière de la plaquette, qui est emprisonnée du côté extérieur, a flué vers l'intérieur de la plaquette, dans le sens indiqué par les flèches 1. Il en résulte que de légères surépaisseurs ont pu se former au voisinage de la région centrale de la plaquette, ces surépaisseurs étant mises à profit pour "donner de la matière" lors de l'opération de thermoformage qui suit le matriçage.

L'homme du métier pourra réaliser des essais pour déterminer la quantité de matière qui subit le fluage et vérifier la position qu'elle occupe à la fin du matriçage. Il pourra en conséquence choisir l'épaisseur initiale de la plaquette de manière optimale en fonction du niveau d'étirement et de l'épaisseur que l'on souhaite donner à l'objet finalement obtenu. Il pourra ainsi utiliser une plaquette légèrement moins épaisse que la plaquette du même type qui serait utilisée pour réaliser par thermoformage un récipient analogue, mais dont le rebord n'aurait pas subi de matriçage.

A partir de la situation de la figure 4, on peut réaliser le thermoformage en délaçant le piston de thermoformage de la position d'effacement qu'il occupait précédemment, dans sa position de thermoformage. Par exemple, sur la figure 5, la matrice 50 délimite au moins une partie de la paroi de la chambre de thermoformage 56, tandis que le support 54 et le poinçon de matriçage 52 délimitent le cylindre 58 dans lequel le piston de thermoformage 60 est rétracté dans sa position d'effacement. La figure 5 montre la position du piston au cours du thermoformage, lorsqu'il commence à pénétrer dans la chambre 56 pour étirer la matière de la pastille 12. Dans cette situation, la région périphérique 12A de cette pastille est parfaitement maintenue entre le bord de matriçage 50A et le bord actif 52A du poinçon de matriçage.

Dans cet exemple, le thermoformage est réalisé vers le bas, c'est-à-dire que le piston est déplacé vers le bas pour occuper sa position de thermoformage. Avec un système analogue, on pourrait réaliser le thermoformage vers le haut, comme sur la figure 1. Dans ce cas, la matrice délimiterait le cylindre 26 dans lequel le piston 30 serait rétracté dans sa position d'effacement, ce cylindre étant situé sous la chambre de thermoformage. Cette dernière serait quant à elle délimitée au moins en partie par le corps qui porterait le poinçon de matriçage 28.

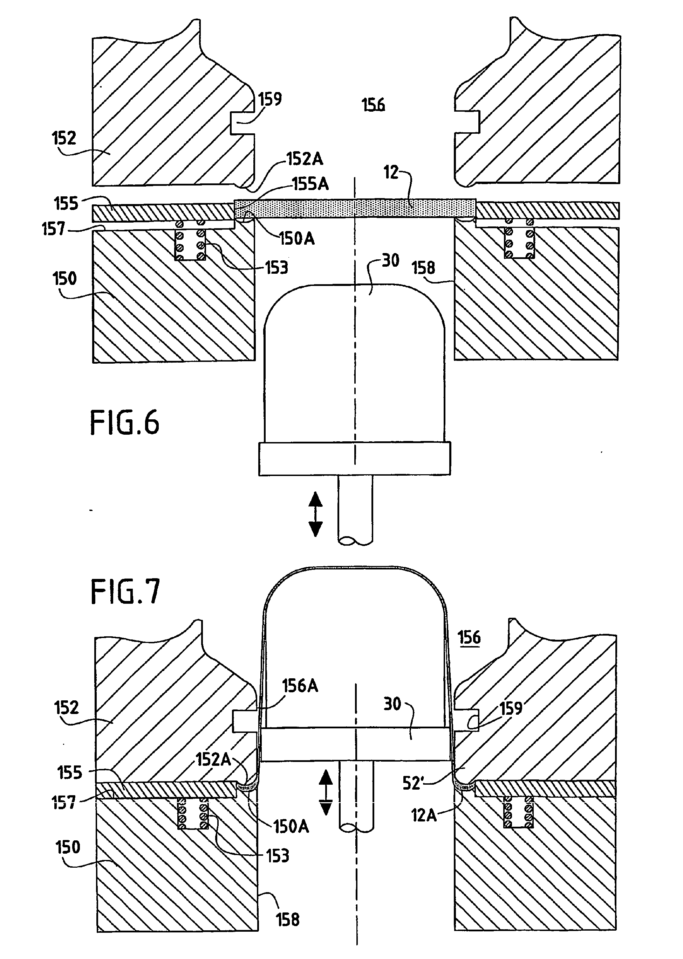

Les figures 6 et 7 montrent une variante de réalisation pour le thermoformage vers le haut. Sur cette variante, la matrice 150 délimite le cylindre 158 dans lequel le piston 30 est rétracté dans sa position d'effacement. Le poinçon de matriçage 152 est formé par une partie du corps de la chambre de thermoformage 156, dont le bord de l'ouverture forme le bord actif 152A du poinçon. Une pièce intermédiaire de calage 155 délimitant une ouverture 155A dans laquelle est calée la plaquette 12 en étant placée sur le bord actif de matriçage 150A, est disposée entre la matrice 150 et le poinçon 152, sans interférer entre le bord actif 152A du poinçon et le bord de matriçage 150A. Cette pièce, en forme de galette annulaire, est portée élastiquement par le corps de la matrice 150, par l'intermédiaire de ressorts 153.

Sur la figure 6, la plaquette 12 est placée dans l'ouverture 155A de la pièce 155 et repose sur le bord de matriçage 150A, le poinçon et la matrice étant écartés l'un de l'autre.

Sur la figure 7, le matriçage s'est opéré, le corps du poinçon s'étant déplacé pour repousser la pièce intermédiaire 155 dans un renfoncement 157 ménagé entre le poinçon et la matrice, en comprimant les ressorts, tandis que le bord actif du poinçon, situé en dehors de ce renfoncement, a repoussé la partie 12A de la plaquette 12 contre la matrice. Le thermoformage commence, le piston 130 repoussant la matière thermoplastique de la région centrale de la plaquette, dans la chambre de thermoformage 156.

A titre d'exemple, sur les figures 6 et 7, le bord de matriçage 150A et le bord actif 152A du poinçon de matriçage sont conformés de manière à donner au rebord du récipient formé dans la région périphérique 12A de la plaquette une forme différente de la forme en bourrelet des figures précédentes, sur lesquelles les bords 50A et 52A sont concaves. En revanche, sur les figures 6 et 7, les formes des bords 150A et 152A permettent de doter le récipient d'un rebord en corolle 39 comme sur la figure 10, dont la face supérieure 39A est convexe, tandis que la face inférieure 39B est sensiblement plane ou concave. Pour cela, le thermoformage étant opéré vers le haut, le bord de matriçage 150A est concave, tandis que le bord actif 152A du poinçon est convexe ou sensiblement plan.

La paroi 156A de la chambre de thermoformage 156 présente une gorge annulaire ou hélicoïdale 159 qui permet, comme le montre la figure 10, de doter la paroi du corps 37 du récipient 38 d'un bourrelet 38A qui permet par exemple de retenir un moyen de sécurité empêchant l'enlèvement intempestif du couvercle du récipient. Si la gorge 159 est formée en hélice, ce bourrelet 38A peut être l'amorce d'un pas de vis permettant de visser ce bouchon avant sa première séparation du récipient pour absorber le produit qu'il contient.

Lorsque l'étape de thermoformage sera terminée, le piston 30 ou 60 pourra être ramené dans sa position d'effacement et le poinçon de matriçage pourra être ramené dans sa position inactive, de manière à permettre l'évacuation hors de la station de thermoformage du récipient qui vient d'être réalisé.

Sur les figures 8 et 9, la matrice 150 peut être identique à celle des figures 6 et 7. La pièce intermédiaire de calage 255 est formée par une pince dont les deux bras 255A, 255B sont articulés de manière à pouvoir se déplacer dans un plan perpendiculaire à la direction de déplacement du poinçon de thermoformage. Avant son matriçage, une plaquette peut être placée sur le bord actif de matriçage 150A, à l'intérieur de l'ouverture délimitée par les zones concaves 255'A, 255'B en regard des deux bras de la pince 255, alors que ces bras sont écartés comme sur la figure 8.

Avant le matriçage, les deux bras 255A, 255B sont refermés de telle sorte que leurs zones concaves forment un contour fermé (en particulier circulaire) qui donnera sa forme à la périphérie du rebord du récipient.

Cette variante facilite la mise en place correcte de la plaquette sur le bord actif de matriçage même si cette plaquette est légèrement déformée à l'issue de son chauffage et de son transport. De plus, la fermeture de la pince conforme le contour de cette plaquette pour corriger ses éventuelles déformations.

Par exemple, chaque bras porte un galet de came, respectivement 256A, 256B et des doigts, 257A, 257B embarqués sur le poinçon 152 coopèrent avec ces galets par leurs rampes lors du rapprochement du poinçon par rapport à la matrice pour refermer les bras de la pince juste avant que ne commence le matriçage proprement dit.

Les bras sont constamment rappelés dans leur position écartée par des moyens élastiques non représentés, cette position étant limitée par des butées, respectivement 258A et 258B.

Comme la pièce 155 des figures 6 et 7, la pince 255 peut être portée élastiquement par la matrice pour s'escamoter partiellement lors du matriçage.

Si, comme c'est le cas sur la figure 10, le récipient 38 présente une forme en contre-dépouille, la chambre de thermoformage pourra être au moins partiellement ouverte dans la région correspondant à cette contre-dépouille pour permettre le démoulage. Ensuite, pour ramener le récipient dans les autres stations de l'installation, à commencer par la station de remplissage, les moyens de transfert de tout type connu pourront être utilisés.

Le récipient 38 représenté sur la figure 10 présente une telle forme en contre-dépouille. Il présente globalement la forme d'une bouteille, dont la zone en contre-dépouille 38' forme le goulot. Le rebord 39 matricé donne au bord du goulot, constituant la face supérieure 39A du rebord, une forme convexe qui augmente l'agrément d'utilisation du récipient, en particulier lorsque l'on boit directement au goulot le produit qu'il contient. Dans l'exemple représenté, la face inférieure 39B du rebord 39 est quant à elle concave, ce qui, d'une part, permet d'éviter toute épaisseur de matériau inutile dans la région du rebord et, d'autre part, constitue éventuellement un dégagement sous le rebord pour y loger une bague d'inviolabilité ou analogue permettant à l'utilisateur de vérifier lorsqu'il ouvre le récipient, qu'il s'agit de la première ouverture de ces derniers après la mise en place du bouchon. Par exemple, le matériau thermoplastique utilisé pour former ces plaquettes peut être à base de polystyrène, de polypropylène ou de polyéthylène téréphtalate.

## Revendications

1. Procédé de fabrication d'objets tels que des récipients (38) par thermoformage à partir de plaquettes de matériau thermoplastique (12), dans lequel on chauffe les plaquettes et on réalise une étape de thermoformage dans laquelle on déforme plastiquement les plaquettes chauffées par étirement, dans lequel, avant l'étape de thermoformage, on réalise une étape de matriçage dans laquelle, la matière des plaquettes étant emprisonnée du côté extérieur, on déforme les régions périphériques (12A) des plaquettes (12) par matriçage,
**caractérisé en ce que**, avant de réaliser le matriçage d'une plaquette, on met cette plaquette en place sur un bord de matriçage (50A, 150) entre les deux bras ouverts (255A, 255B) d'une pince de calage (255) et on referme ces bras pour conformer le contour de la plaquette.

2. Procédé selon la revendication 1, **caractérisé en ce que**, avant l'étape de matriçage, on chauffe au moins les régions périphériques (12A) des plaquettes (12).

3. Procédé selon la revendication 1 ou 2, **caractérisé en ce que** l'on réalise l'étape de thermoformage en utilisant un piston d'étirement chauffant (30, 60).

4. Procédé selon l'une quelconque des revendications 1 à 3, **caractérisé en ce que**, lors de l'étape de matriçage, on utilise pour chaque plaquette (12) une matrice (50 ; 150) qui supporte la région périphérique (12A) de la plaquette (12) et **en ce que** la plaquette continue d'être supportée par cette matrice au moins pendant l'étape de thermoformage.

5. Procédé selon la revendication 4, **caractérisé en ce que** l'on réalise le matriçage de chaque plaquette (12) entre la matrice (50 ; 150) et un poinçon (28 ; 52 ; 152), et **en ce que**, lors de l'étape de thermoformage, on maintient la plaquette entre ledit poinçon et ladite matrice.

6. Procédé selon la revendication 4 ou 5, **caractérisé en ce que**, pour chaque plaquette (12), on réalise l'étape de matriçage puis, sans déplacer la plaquette, on réalise l'étape de thermoformage.

7. Procédé selon l'une quelconque des revendications 4 à 6, **caractérisé en ce que**, avant l'étape de matriçage, on cale les plaquettes (12) sur le bord actif de matriçage (150A) de la matrice.

8. Installation pour fabriquer des objets tels que des récipients (38) par thermoformage à partir de plaquettes de matériau thermoplastique (12), comprenant des moyens de chauffage (16) desdites plaquettes et une station de thermoformage (24) apte à déformer plastiquement les plaquettes chauffées par étirement, comprenant un outil de matriçage (28; 50, 52 ; 150, 152) apte à déformer les régions périphériques (12A) des plaquettes (12) avant leur thermoformage, cet outil coopérant avec des moyens (54, 155) pour emprisonner les plaquettes lors du matriçage,
**caractérisée en ce qu'**elle comprend une pièce de calage (255) formée par une pince dont les deux bras (255A, 255B) peuvent être ouverts lors de la mise en place d'une plaquette sur un bord de matriçage (50A ; 150) de l'outil de matriçage et refermés avant le matriçage pour délimiter entre eux une ouverture (155A), dans laquelle la plaquette est calée et qui est apte à conformer le contour de la plaquette avant le matriçage.

9. Installation selon la revendication 8, **caractérisée en ce que** l'outil de matriçage comporte une matrice (50 ; 150) comprenant un bord de matriçage (50A ; 150) apte à supporter la région périphérique (12A) d'une plaquette (12) en ménageant un espace libre (51) au droit de la région centrale (12B) de la plaquette et **en ce que** cette matrice constitue un support pour la plaquette dans la station de thermoformage.

10. Installation selon la revendication 8 ou 9, **caractérisée en ce que** l'outil de matriçage comporte un poinçon de matriçage (52 ; 152) qui est susceptible d'être déplacé entre une position active dans laquelle il est rapproché de la matrice (50 ; 150) pour réaliser le matriçage d'une plaquette (12) en coopérant avec une région périphérique (12A) de cette plaquette portée par la matrice; et une position inactive, dans laquelle il est écarté de la matrice, et **en ce que** la matrice et le poinçon de matriçage sont disposés dans la station de thermoformage (24) et forment des moyens de maintien de la plaquette (12) dans ladite station.

11. Installation selon la revendication 10**, caractérisée en ce que** la pièce de calage (155 ; 255) est portée élastiquement par le corps de la matrice et peut être repoussée dans un renfoncement par le poinçon.

12. Installation selon la revendication 10 et l'une quelconque des revendications 8 à 11, **caractérisée en ce que** la station de thermoformage (24) comprend un piston de thermoformage (30, 60) et une chambre de thermoformage (32 ; 56 ; 156) situés en regard l'un de l'autre, le piston étant susceptible d'être déplacé entre une position de thermoformage dans laquelle il pénètre dans la chambre et une position d'effacement dans laquelle il est écarté de cette chambre et **en ce qu'**elle comprend des moyens pour commander successivement le déplacement du poinçon de matriçage (52 ; 152) de sa position inactive à sa position active, le déplacement du piston de thermoformage (30, 60) de sa position d'effacement à sa position de thermoformage puis de nouveau à sa position d'effacement et le déplacement du poinçon de matriçage de sa position active à sa position inactive.

13. Installation selon la revendication 12, **caractérisée en ce que** le piston de thermoformage (30, 60) est un piston chauffant.

14. Installation selon la revendication 12 ou 13, **caractérisée en ce que** la chambre de thermoformage (32 ; 156) est disposée au-dessus du piston de thermoformage (30) et **en ce que** la matrice (150) est formée dans la paroi d'un cylindre (158) dans lequel le piston est ramené dans sa position d'effacement, tandis que le poinçon de matriçage (152) coopère avec une partie de bord de la chambre de thermoformage.

15. Installation selon la revendication 12 ou 13, **caractérisée en ce que** le piston de thermoformage (60) est disposé au-dessus de la chambre de thermoformage (56) et **en ce que** la matrice (50) est formée dans la paroi de la chambre de thermoformage, tandis que le poinçon de matriçage (52) coopère avec une partie de bord d'un cylindre (58) dans lequel le piston est ramené dans sa position d'effacement.

16. Installation selon l'une quelconque des revendications 8 à 15, **caractérisée en ce que** l'outil de matriçage (28 ; 50, 52 ; 150, 152) comporte au moins une partie chauffée.

17. Installation selon l'une quelconque des revendications 8 à 16, **caractérisée en ce que** les moyens de chauffage comprennent une station de chauffage (16) à la sortie de laquelle sont disposés des moyens de préhension (18, 20, 22) aptes à saisir les plaquettes chaudes et à placer ces dernières dans l'outil de matriçage.

## Claims

1. A method of manufacturing objects such as containers (38) by thermoforming from blanks of thermoplastic material (12), in which method the blanks are heated and a thermoforming step is performed in which the heated blanks are deformed plastically by stretching, in which method, before the thermoforming step, a die-punching step is performed in which, with the material of the blanks being held captive on the outside, the peripheral regions (12A) of the blanks (12) are deformed by die-punching,
the method being **characterised in that**, before a blank is die-punched, the blank is put in place on a die-punching edge (50A; 150) between both open arms (255A, 255B) of wedge tongs (255) and said arms are closed so as to shape the outline of the blank.

2. A method according to claim 1, **characterised in that**, before the die-punching step, at least the peripheral regions (12A) of the blanks (12) are heated.

3. A method according to claim 1 or claim 2, **characterised in that** the thermoforming step is performed by using a heater stretch piston (30, 60).

4. A method according to any one of claims 1 to 3, **characterised in that**, during the die-punching step, for each blank (12), a die (50; 150) is used that supports the peripheral region (12A) of the blank (12), and **in that** the blank continues to be supported by said die at least during the thermoforming step.

5. A method according to claim 4, **characterised in that** each blank (12) is die-punched between the die (50; 150) and a punch (28; 52; 152), and **in that**, during the thermoforming step, the blank is held between said punch and said die.

6. A method according to claim 4 or claim 5, **characterised in that**, for each blank (12), the die-punching step is performed and then, without moving the blank, the thermoforming step is performed.

7. A method according to any one of claims 4 to 6, **characterised in that**, before the die-punching step, the blanks (12) are wedged on the die-punching active edge (150A) of the die.

8. An installation for manufacturing objects such as containers (38) by thermoforming from blanks (12) of thermoplastic material, said installation comprising heater means (16) for heating said blanks, and a thermoforming station (24) suitable for plastically deforming the heated blanks by stretching, said installation comprising a die-punching tool (28; 50, 52; 150, 152) suitable for deforming the peripheral regions (12A) of the blanks (12) before they are thermoformed, said tool co-operating with means (54, 155) for holding the blanks captive during the die-punching,
said installation being **characterised in that** it comprises a wedge piece (255) formed by tongs whose two arms (255A, 255B) can be open while the blank is being put in place on a die-punching edge (50A; 150) of the die-punching tool and closed before the die-punching so as to define between them an opening (155A), in which the blank is wedged and which is suitable for shaping the outline of the blank before the die-punching.

9. An installation according to claim 8, **characterised in that** the die-punching tool includes a die (50; 150) having a die-punching edge (50A; 150) suitable for supporting the peripheral region (12A) of a blank (12) while providing an empty space (51) in register with the central region (12B) of the blank, and **in that** said die constitutes a support for the blank in the thermoforming station.

10. An installation according to claim 8 or 9, **characterised in that** the die-punching tool includes a die-punching punch (52; 152) which is suitable for being moved between an active position in which it is brought towards the die (50; 150) for performing the die-punching of a blank (12) by co-operating with a peripheral region (12A) of said blank carried by the die, and an inactive position, in which it is spaced apart from the die, and **in that** the die and the die-punching punch are disposed in the thermoforming station (24) and form means for holding the blank (12) in said station.

11. An installation according to claim 10, **characterised in that** the wedge piece (155; 255) is carried elastically by the body of the die, and can be pushed back into a setback by the punch.

12. An installation according to claim 10, and to any one of claims 8 to 11, said installation being **characterised in that** the thermoforming station (24) comprises a thermoforming piston (30, 60) and a thermoforming chamber (32; 56; 156) situated facing each other, the piston being suitable for being moved between a thermoforming position in which it penetrates into the chamber and a retracted position in which it is spaced apart from said chamber, and **in that** said installation includes control means for successively causing the die-punching punch (52; 152) to move from its inactive position to its active position, and the thermoforming piston (30, 60) to move from its retracted position to its thermoforming position, and then back to its retracted position, and the die-punching punch to move from its active position to its inactive position.

13. An installation according to claim 12, **characterised in that** the thermoforming piston (30, 60) is a heater piston.

14. An installation according to claim 12 or claim 13, **characterised in that** the thermoforming chamber (32; 156) is disposed above the thermoforming piston (30), and **in that** the die (150) is formed in the wall of a cylinder (158) into which the piston is returned in its retracted position, while the die-punching punch (152) co-operates with an edge portion of the thermoforming chamber.

15. An installation according to claim 12 or claim 13, **characterised in that** the thermoforming piston (60) is disposed above the thermoforming chamber (56), and **in that** the die (50) is formed in the wall of the thermoforming chamber, while the die-punching punch (52) co-operates with an edge portion of a cylinder (58) into which the piston is returned in its retracted position.

16. An installation according to any one of claims 8 to 15, **characterised in that** the die-punching tool (28; 50, 52; 150, 152) includes at least one heated portion.

17. An installation according to any one of claims 8 to 16, **characterised in that** the heater means comprise a heater station (16) at the outlet of which pick-up means (18, 20, 22) are disposed that are suitable for grasping the hot blanks and for placing them in the die-punching tool.

## Patentansprüche

1. Verfahren zum Herstellen von Gegenständen wie beispielsweise Behälter (38) durch Thermoformen ausgehend von Platten (12) aus thermoplastischem Werkstoff, bei dem die Platten erwärmt werden und ein Thermoformschritt ausgeführt wird, in dem die erwärmten Platten durch Streckziehen plastisch verformt werden, und bei dem vor dem Thermoformschritt ein Gesenkformschritt durchgeführt wird, in dem, da der Werkstoff der Platten von außen umschlossen ist, die Randbereiche (12A) der Platten durch Gesenkformen verformt werden,
**dadurch gekennzeichnet, dass** vor Ausführen des Gesenkformens einer Platte diese Platte auf einem Gesenkformrand (50A, 150) zwischen den beiden geöffneten Schenkeln (255A, 255B) einer Klemmzange (255) angeordnet wird und diese Schenkel zum Formen der Kontur der Platte geschlossen werden.

2. Verfahren nach Anspruch 1,
**dadurch gekennzeichnet, dass** vor dem Gesenkformschritt wenigstens die Randbereiche (12A) der Platten (12) erwärmt werden.

3. Verfahren nach Anspruch 1 oder 2,
**dadurch gekennzeichnet, dass** der Thermoformschritt durch Verwenden eines heizbaren Streckziehstößels (30, 60) ausgeführt wird.

4. Verfahren nach einem der Ansprüche 1 bis 3,
**dadurch gekennzeichnet, dass** für jede Platte (12) bei dem Gesenkformschritt eine Matrize (50; 150) verwendet wird, die den Randbereich (12A) der Platte (12) trägt, und dass die Platte zumindest während des Thermoformschritts weiterhin von der Matrize gehalten wird.

5. Verfahren nach Anspruch 4,
**dadurch gekennzeichnet, dass** das Gesenkformen jeder Platte (12) zwischen der Matrize (50; 150) und einem Stempel (28; 52; 152) erfolgt und dass die Platte bei dem Thermoformschritt zwischen dem Stempel und der Matrize gehalten wird.

6. Verfahren nach Anspruch 4 oder 5,
**dadurch gekennzeichnet, dass** für jede Platte (12) zunächst der Gesenkformschritt ausgeführt wird und dann ohne Verschieben der Platte der Thermoformschritt.

7. Verfahren nach einem der Ansprüche 4 bis 6,
**dadurch gekennzeichnet, dass** die Platten (12) vor dem Gesenkformschritt auf dem aktiven Gesenkformrand (150A) der Matrize festgeklemmt werden.

8. Anlage zum Herstellen von Gegenständen wie beispielsweise Behälter (38) durch Thermoformen ausgehend von Platten (12) aus thermoplastischem Werkstoff, mit Mitteln (16) zum Erwärmen der Platten und einer Thermoformstation (24), die die erwärmten Platten durch Streckziehen plastisch zu verformen vermag, mit einem Gesenkformwerkzeug (28; 50, 52; 150, 152), das die Randbereiche (12A) der Platten (12) vor deren Thermoformung zu verformen vermag, wobei dieses Werkzeug mit Mitteln (54, 155) zum Umschließen der Platten beim Gesenkformen zusammenwirkt, **dadurch gekennzeichnet, dass** sie ein Klemmteil (255) umfasst, das von einer Zange gebildet ist, deren Schenkel (255A, 255B) beim Einlegen einer Platte auf einem Gesenkformrand (50A; 150) geöffnet und vor dem Gesenkformen geschlossen werden können, um zwischen sich eine Öffnung (155A) zu begrenzen, in der die Platte festgeklemmt ist und die die Kontur der Platte vor dem Gesenkformen zu bilden vermag.

9. Anlage nach Anspruch 8,
**dadurch gekennzeichnet, dass** das Gesenkformwerkzeug eine Matrize (50; 150) mit einem Gesenkformrand (50A; 150) umfasst, der den Randbereich (12A) einer Platte (12) zu tragen vermag und hierbei rechtwinklig zu dem mittleren Bereich (12B) der Platte einen Freiraum (51) bildet, und dass die Matrize einen Träger für die Platte in der Thermoformstation bildet.

10. Anlage nach Anspruch 8 oder 9,
**dadurch gekennzeichnet, dass** das Gesenkformwerkzeug einen Gesenkformstempel (52; 152) umfasst, der zwischen einer aktiven Position, in der er der Matrize (50; 150) angenähert ist, um das Gesenkformen einer Platte (12) durch Zusammenwirken mit einem Randbereich (12A) der von der Matrize getragenen Platte auszuführen, und einer inaktiven Position verschiebbar ist, in der er von der Matrize entfernt ist, und dass die Matrize und der Gesenkformstempel in der Thermoformstation (24) angeordnet sind und in dieser Station Mittel zum Halten der Platte (12) bilden.

11. Anlage nach Anspruch 10,
**dadurch gekennzeichnet, dass** das Klemmteil (155; 255) vom Körper der Matrize elastisch getragen ist und von dem Stempel in eine Vertiefung zurückgeschoben werden kann.

12. Anlage nach Anspruch 10 und einem der Ansprüche 8 bis 11,
**dadurch gekennzeichnet, dass** die Thermoformstation (24) einen Thermoformstößel (30, 60) und eine Thermoformkammer (32; 56; 156) umfasst, die einander gegenüberliegend angeordnet sind, wobei der Stößel zwischen einer Thermoformposition, in der er in die Kammer eindringt, und einer zurückgezogenen Position verschoben werden kann, in der er von der Kammer entfernt ist, und dass sie Mittel umfasst, um nacheinander das Verschieben des Gesenkformstempels (52; 152) von der inaktiven in die aktive Position, das Verschieben des Thermoformstößels (30; 60) von der zurückgezogenen Position in die Thermoformposition und dann wieder in die zurückgezogene Position und das Verschieben des Gesenkformstempels von der aktiven Position in die inaktive Position zu steuern.

13. Anlage nach Anspruch 12,
**dadurch gekennzeichnet, dass** der Thermoformstößel (30, 60) ein heizbarer Stößel ist.

14. Anlage nach Anspruch 12 oder 13,
**dadurch gekennzeichnet, dass** die Thermoformkammer (32; 156) über dem Thermoformstößel (30) angeordnet ist und dass die Matrize (150) in der Wand eines Zylinders (158) ausgebildet ist, in den der Stößel in der zurückgezogenen Position zurückgefahren wird, während der Gesenkformstempel (152) mit einem Randteil der Thermoformkammer zusammenwirkt.

15. Anlage nach Anspruch 12 oder 13,
**dadurch gekennzeichnet, dass** der Thermoformstößel (60) über der Thermoformkammer (56) angeordnet ist und dass die Matrize (50) in der Wand der Thermoformkammer ausgebildet ist, während der Gesenkformstempel (52) mit einem Randteil eines Zylinders (58) zusammenwirkt, in den der Stößel in der zurückgezogenen Position zurückgefahren wird.

16. Anlage nach einem der Ansprüche 8 bis 15,
**dadurch gekennzeichnet, dass** das Gesenkformwerkzeug (28; 50, 52; 150, 152) wenigstens einen beheizten Abschnitt aufweist.

17. Anlage nach einem der Ansprüche 8 bis 16,
**dadurch gekennzeichnet, dass** die Heizmittel eine Heizstation (16) aufweisen, an deren Ausgang Greifmittel (18, 20, 22) angeordnet sind, die die warmen Platten zu erfassen und in das Gesenkformwerkzeug einzulegen vermögen.
